# EUROPEAN PATENT APPLICATION

(11) **EP 4 831 041 A1**
(43) Date of publication of application: **28.10.2026**
(21) Application number: 26171615.3
(22) Date of filing: 10.04.2026
(51) Int. Cl.: B62D 25/12, B62D 35/00

(54) **IMPROVED FRONT PORTION OF A HEAVY VEHICLE**

(30) Priority: 16.04.2025 IT 202500008523
(71) Applicant: Iveco S.p.A., 10156 Torino (IT)
(72) Inventor: MORANO, Ivan Vito Antonio, 10156 TORINO (IT); ESPOSITO, Carmine Andrea, 10156 TORINO (IT)
(74) Representative: Studio Torta S.p.A.

(57) **Abstract**

Air blocking element (51) for a cab (3) of a commercial vehicle (1), the air blocking element (51) comprising a main portion (52) provided with an inner edge (52') and an outer edge (52"), wherein the inner edge (52') is substantially linear and at the same quota along a transversal axis (C) of the cab (3),
wherein, in use, the inner edge (52') is at the same position of a lateral edge of a hood (4) of the vehicle (1) thereby contouring a lateral portion of a perimeter (6) of a space (5) of the vehicle (1).

## Description

### CROSS-REFERENCE TO RELATED APPLICATIONS

This patent application claims priority from Italian patent application no. 102025000008523 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electric-traction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by an air blocking element, a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air blocking element according to the invention; and

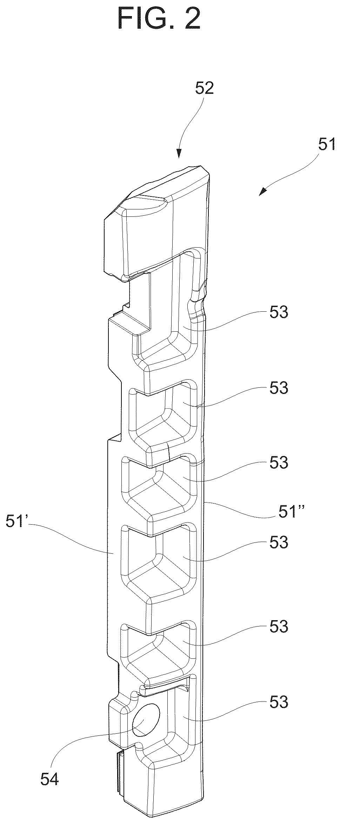

- Figures 2 and 3 are respectively a front and rear perspective view of the air blocking element according to the invention.

### DETAILED DESCRIPTION OF THE INVENTION

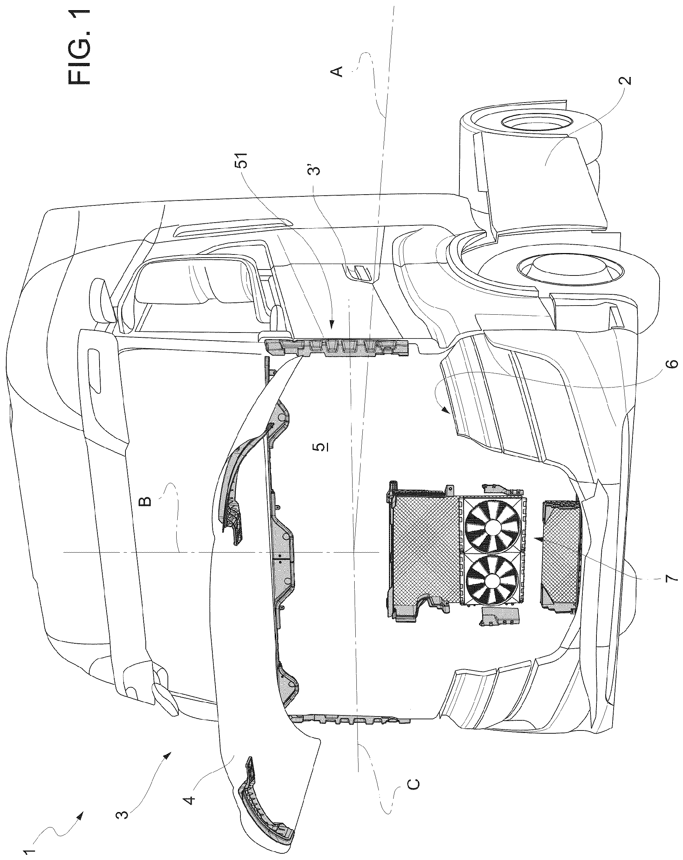

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In particular, cab 3 comprises a pair of air blocking elements 51configured to block the air passage within the hood 4 and the body 3' along lateral portions of the hood 4 along vertical axis B , in particular along the entire extension of the hood 4 along such axis.

In the following, since the two air blocking elements 51 are equal for each side of the hood 4, only one will be described for sake of brevity.

In detail, blocking element 51 is carried by the body 3' along an upper edge of space 5, in particular it is fixed to the body 3' and cooperates at contact with hood 4 at the lateral portion mentioned above.

Blocking element 51 comprises essentially a main portion 52 that is shaped as a road element. In particular, in the disclosed embodiment, the road element has substantially a parallelepiped shape.

Accordingly, the main portion has an inner edge 52' and an outer edge 52'' that have both substantially linear, i.e. has substantially the same quota along transversal axis C.

In detail, in use, the inner edge 52' is at the same position of the lateral edge of the hood 4 thereby contouring a lateral portion of the perimeter 6 of the space 5.

In detail, main portion 52 is realized as one single element, in particular realized in polymeric material, such as plastic.

As shown, the main portion 52 is provided with a plurality of recesses 53. In particular, in the disclosed embodiment, such recesses 53 are a plurality and are aligned along vertical axis.

In further details, such recesses 53 have different dimensions one with respect to the other, i.e. a wider one is alternated with a narrower one along vertical axis.

Preferably such recesses 53 have a squared shape extending within main portion 52 along longitudinal axis A. In detail, they are delimited by a bottom wall along longitudinal axis A and closed laterally, i.e. about longitudinal axis A by lateral walls.

In particular, in the disclosed embodiment, the recesses 53 are opened at a lateral side, in particular at the side adjacent to the inner side 51'.

The air blocking element 51 is provided with at least one fixing point 54, in particular comprising an opening configured to allow housing of fixing means such as threaded elements.

More in detail, such fixing point 54 is realized in the lowest recess 53 along vertical axis B.

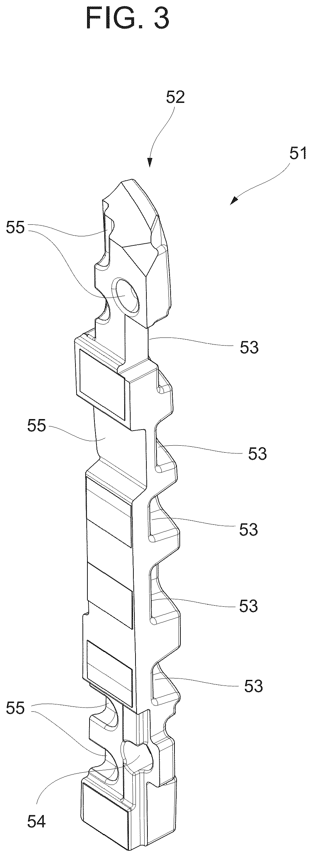

As better shown in figure 3, the blocking element 51 is provided with at least one coupling point 55 configured to coupled with a respective coupling point realized in the body 3' of the vehicle.

In the disclosed embodiment, coupling point 55 are a plurality and are seats 55 realized within main portion 52 in the opposite direction with respect to recesses 53 along longitudinal axis A.

In particular, coupling points are provided all along the extension of main portion 52 along vertical axis B.

In detail, the inner and/or outer edges can be provided with sealings (not shown) configured to be in contact with the hood 4/body 3' thereby locking air passage.

In particular, sealing can be a polymeric, rubber, sealing, more in detail an extrusion sealing.

The operation of the embodiment of the invention as described above is the following.

The blocking element 51 allows blocking air passing through the lateral space between hood 4 and body 3 thereby reducing aerodynamic drag.

In view of the foregoing, the advantages of the air blocking element, cab and vehicle according to the invention are apparent.

Thanks to the claimed blocking element, the air passage through the space between lateral portions of the hood and the body of the cab is avoided.

Therefore, air drag is reduced and consequently vehicle fuel consumption.

Furthermore, the realization in plastic material and in low pieces, e.g. by molding, allows cost-effective production of the blocking element.

Moreover, the proposed shape with recesses allows at the same time a light main structure without providing an excessive weight, thereby decreasing production costs and increasing robustness of the air blocking element 51.

The opening/s and the seat/s furthermore allow a quick mounting - in stable manner - and removal - if needed -of the air blocking element.

It is clear that modifications can be made to the described air blocking element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Air blocking element (51) for a cab (3) of a commercial vehicle (1), said air blocking element (51) comprising a main portion (52) provided with an inner edge (52') and an outer edge (52''), wherein said inner edge (52') is substantially linear and at the same quota along a transversal axis (C) of said cab (3),
wherein, in use, said inner edge (52') is at the same position of a lateral edge of a hood (4) of said vehicle (1) thereby contouring a lateral portion of a perimeter (6) of a space (5) of said vehicle (1).

2. Air blocking element according to claim 1, wherein said main portion (52) is rod-shaped along said vertical axis (B).

3. Air blocking element according to claim 2, wherein said central portion (52a) has a parallelepiped shape.

4. Air blocking element according to any of the preceding claims, wherein said main portion (52) is realized in as a monolithic element.

5. Air blocking element according to any of the preceding claims, wherein said main portion (52) is realized in polymeric material.

6. Air blocking element according to any of the preceding claims, comprising a plurality of recesses (53) aligned along said vertical axis (B).

7. Air blocking element according to claim 6, wherein said recesses (53) have a squared shape.

8. Air blocking element according to claim 6 or 7, wherein said recesses (53) are opened towards said inner edge (51').

9. Air blocking element according to any of claims 6 to 8, wherein said recesses (53) have different dimensions.

10. Air blocking element according to any of claims 6 to 9, wherein said recesses (53) are alternated so that a wider recess (53) is adjacent to a narrower recess (53).

11. Air blocking element according to any of the preceding claims, comprising at least one opening (54) for fixing said main portion (52) to said body (53).

12. Air blocking element according to claim 11, wherein said opening (54) is realized in one among said recesses (53).

13. Air blocking element according to any of the preceding claims, comprising at least a coupling point (55) configured to cooperate at contact with a respective coupling point realized in said body (3').

14. Cab (3) of a commercial vehicle (1) comprising a body (3') and a hood (4) connected to the body (3') by a movable connection to selectively allow or deny access to a space (5) realized in said body (3'), said cab (3) being provided with an air blocking element (51) according to any of the preceding claims, said air blocking element (51) being placed between a lateral edge of said hood (4) and said body (3') to block air passing through such lateral edge of said hood (4) and said body (3').

15. Vehicle (1) comprising a cab (3) according to claim 14.
